# EUROPEAN PATENT APPLICATION

(11) **EP 4 117 090 A1**
(43) Date of publication of application: **11.01.2023**
(21) Application number: 21849779.0
(22) Date of filing: 29.07.2021
(51) Int. Cl.: H01M 10/653, H01M 10/647, H01M 50/20

(54) **METHOD FOR MANUFACTURING BATTERY MODULE**

(30) Priority: 29.07.2020 KR 20200094336; 21.07.2021 KR 20210095773
(71) Applicant: LG Energy Solution, Ltd., Seoul 07335 (KR)
(72) Inventor: JEON, Hyun Wook, Daejeon 34122 (KR)
(74) Representative: Goddar, Heinz J.
(86) International application number: PCT/KR2021/009872
(87) International publication number: WO 2022/025662

(57) **Abstract**

Provided is a method for manufacturing a battery module, the method including: manufacturing a battery cell stack by stacking a plurality of plate-shaped battery cells to be parallel and adjacent to each other; accommodating the battery cell stack in a module frame including four plates surrounding at least four surfaces of the battery cell stack; attaching adhesive tapes to the vicinities of an injection hole and an observation hole formed in a lower plate among the four plates; injecting a thermal conductive resin solution through the injection hole; and writing injection information of the thermal conductive resin solution on at least a portion of the adhesive tape.

## Description

### [Technical Field]

### CROSS-REFERENCE TO RELATED APPLICATION

This application claims priority to and the benefit of Korean Patent Application No. 10-2020-0094336 filed in the Korean Intellectual Property Office on July 29, 2020, and Korean Patent Application No. 10-2021-0095773 filed in the Korean Intellectual Property Office on July 21, 2021, the entire contents of which are incorporated herein by reference.

The present invention relates to a method for manufacturing a battery module, and more particularly, to a method for manufacturing a battery module which may minimize an error caused by an operator during a process of manufacturing the battery module.

### [Background Art]

There has been increasing technology development and demand for a mobile device, and demand for a secondary battery as an energy source is thus rapidly increasing. Accordingly, many studies have been conducted on the secondary battery which may meet various needs.

The secondary battery is spotlighted as the energy source for a power device such as an electric bicycle, an electric vehicle or a hybrid electric vehicle, as well as a mobile device such as a mobile phone, a digital camera or a laptop computer.

A small battery pack in which one battery cell is packed may be used for a small device such as the mobile phone or the camera. However, a medium-sized or large-sized battery pack, which is a battery pack having two or more battery cells connected in parallel and/or in series with each other, may be used for a mid- to large-sized device such as the laptop computer or the electric vehicle. Accordingly, the number of battery cells included in the battery pack may be variously set based on required output voltage or charge/discharge capacity.

Meanwhile, the battery pack may be formed by connecting the plurality of battery cells in series/parallel with each other. In this case, the battery pack may be generally formed by first forming at least one battery module including the battery cells, and then adding other components thereto by using the at least one battery module.

In the case of such a battery module, there is a gradually emerging importance of technology which may efficiently cool heat occurring in the battery cell as the required battery capacity is increased. To this end, introduced is a structure which may improve thermal conductivity of the battery module by applying a resin for heat dissipation to the inside of a case of the battery module.

However, when the resin is injected into the case of such a battery module through an injection hole, a manufacturing process may be carried out in a state in which a lower surface of the battery module is turned upside down, thus making it difficult to check a condition of the battery module, included in its upper surface, etc. For this reason, defects may often occur by finishing the process in a state where the resin is not sufficiently cured.

### [Disclosure]

### [Technical Problem]

An exemplary embodiment of the present invention provides a method for manufacturing a battery module, which may minimize a process error caused by an operator by making it easy to check a process condition of an injected resin or the like even during processes of injecting the resin into the battery module and curing the same.

However, technical problems to be solved by an exemplary embodiment of the present invention are not limited to the aforementioned problems, and may be variously expanded in the scope of a technical idea included in the present invention.

### [Technical Solution]

According to an exemplary embodiment of the present invention, a method for manufacturing a battery module includes: manufacturing a battery cell stack by stacking a plurality of plate-shaped battery cells to be parallel and adjacent to each other; accommodating the battery cell stack in a module frame including four plates surrounding at least four surfaces of the battery cell stack; attaching adhesive tapes to the vicinities of an injection hole and an observation hole formed in a lower plate among the four plates; injecting a thermal conductive resin solution through the injection hole; and writing injection information of the thermal conductive resin solution on at least a portion of the adhesive tape.

The method may further include curing the thermal conductive resin solution based on the injection information after injecting the thermal conductive resin solution, and then removing the adhesive tape.

Curing time of the thermal conductive resin solution may be one hour to two hours.

The injection hole may include at least two holes formed in a central portion of the lower plate in a length direction.

The observation hole may be spaced apart from the injection hole in the length direction of the lower plate and positioned at each of two ends of the lower plate in the length direction.

The thermal conductive resin solution may be a thermal resin.

The thermal conductive resin solution may be cured to form a thermal conductive resin layer between the battery cell stack and the lower plate.

The injection of the thermal conductive resin solution may be performed until the thermal conductive resin solution is observed in the observation hole.

The adhesive tapes may have holes respectively corresponding to the observation hole and the injection hole, and the excess thermal conductive resin solution overflowing out of the injection hole or the observation hole may also be removed by removing the adhesive tape.

The injection information of the thermal conductive resin solution may include injection time of the thermal conductive resin solution.

The adhesive tape may be a transparent tape, and attached to block the observation hole.

The adhesive tape may be a tape having a characteristic changed by any one of temperature change and time elapse.

The characteristic may be at least one of color and transparency of the adhesive tape.

The writing of the injection information may be performed by an ink, and the ink may be an ink having a characteristic changed by any one of temperature change and time elapse.

The characteristic may be at least one of color and transparency of the ink.

### [Advantageous Effects]

As set forth above, an exemplary embodiment of the present invention may provide the method for manufacturing a battery module, which may minimize the process error caused by the operator by making it easy to check the process condition of the injected resin or the like even during the processes of injecting the resin into the battery module and curing the same.

### [Description of the Drawings]

FIGS. 1 to 6 are views each showing a method for manufacturing a battery module according to an exemplary embodiment of the present invention.
FIG. 7 is a view showing a portion of a cross section taken along line A-A' of FIG. 5.
FIGS. 8a and 8b are cross-sectional views showing a portion of a cross section taken along line B-B' of FIG. 6 respectively in an exemplary embodiment of the present invention and a comparative example.
FIG. 9 is a cross-sectional view showing a portion of a cross section taken along line B-B' of FIG. 6 in another exemplary embodiment of the present invention.

### [Mode for Invention]

Hereinafter, exemplary embodiments of the present invention are described in detail with reference to the accompanying drawings so that those skilled in the art to which the present invention pertains may easily practice the present invention. The present invention may be implemented in various different forms and is not limited to exemplary embodiments provided herein.

A portion unrelated to the description is omitted in order to obviously describe the present invention, and the same or similar components are denoted by the same reference numeral throughout the present specification.

In addition, the size and thickness of each component shown in the accompanying drawings are arbitrarily shown for convenience of explanation, and therefore, the present invention is not necessarily limited to contents shown in the accompanying drawings. The thicknesses are exaggerated in the drawings in order to clearly represent several layers and regions. In addition, in the drawings, the thicknesses of some layers and regions are exaggerated for convenience of explanation.

In addition, when an element such as a layer, a film, a region, or a substrate is referred to as being "on" or "above" another element, it may be "directly on" another element or may have a third element interposed therebetween. On the contrary, when an element is referred to as being "directly on" another element, there is no third element interposed therebetween. In addition, when an element is referred to as being "on" or "above" a reference element, it may be positioned on or below the reference element, and it may not necessarily be "on" or "above" the reference element toward an opposite direction of gravity.

In addition, throughout the present specification, unless explicitly described to the contrary, "including" any components may be understood to imply the inclusion of other elements rather than the exclusion of any other elements.

Further, throughout the specification, the word "on the plane" may indicate a case where a target is viewed from the top, and the word "on the cross section" may indicate a case where a cross section of a target taken along a vertical direction is viewed from the side.

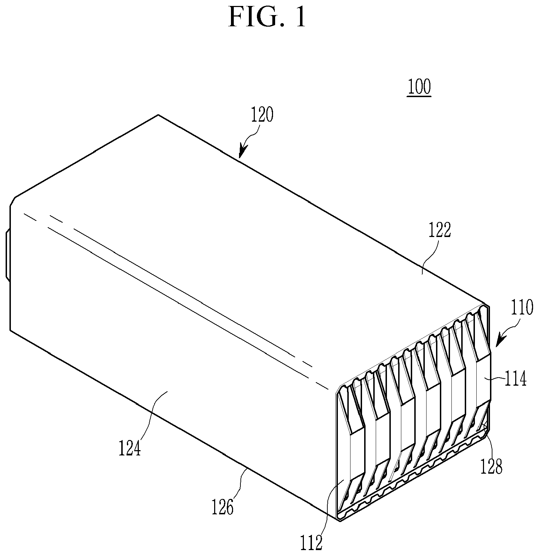

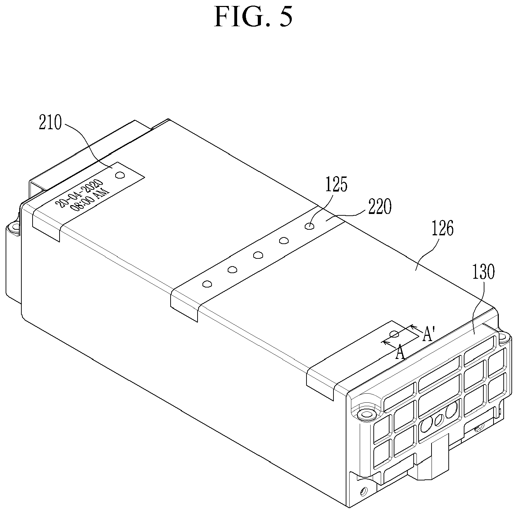

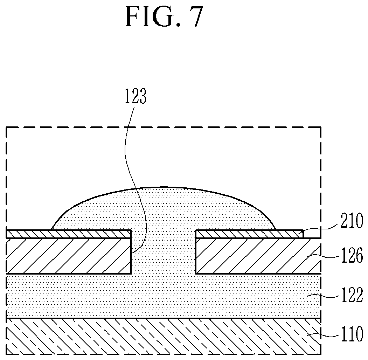

FIGS. 1 to 6 are views each showing a method for manufacturing a battery module according to an exemplary embodiment of the present invention; and FIG. 7 is a view showing a portion of a cross section taken along line A-A' of FIG. 5.

Referring to FIG. 1, a battery module 100 according to an exemplary embodiment of the present invention may be manufactured by first manufacturing a battery cell stack 110 by stacking a plurality of plate-shaped battery cells 112 to be parallel and adjacent to each other and then by accommodating the battery cell stack 110 in a module frame 120 including four plates surrounding at least four surfaces of the battery cell stack 110.

The battery cell stack 110 may be a secondary battery assembly including the plurality of battery cells 112. The battery cell stack 110 may include the plurality of battery cells 112, and each battery cell may include an electrode lead 114. The battery cell stack 110 may be formed by stacking the plurality of battery cells 112 on each other and connecting the battery cells with each other by using the electrode lead 114. The battery cell 112 may be a pouch-type battery cell having a plate shape, and is not limited thereto. The electrode lead 114 may be a positive electrode lead or a negative electrode lead. Here, an end of the electrode lead 114 of each battery cell 112 may be bent in one direction, and may thus come into contact with the end of the electrode lead of another battery cell 112 adjacent thereto. The two electrode leads 114 in contact with each other may be fixed to each other through welding or the like, thereby making the battery cells 112 in the battery cell stack 110 be electrically connected to each other.

The plurality of battery cells 112 may be vertically stacked on each other so that the electrode leads 114 are aligned in one direction to form the battery cell stack 110. The battery cell stack 110 may have at least one opening 128 open in a length direction of the battery cell stack 110, and may be accommodated in the module frame 120 including the four plates surrounding at least four surfaces of the battery cell stack 110. For example, the module frame 120 may have an upper plate 121 and a lower plate 126, which are perpendicular to a surface on which the battery cell stack 110 is mounted, and a pair of side plates 124 which are parallel to the surface on which the battery cell stack 110 is mounted. In addition, this exemplary embodiment describes an example of the module frame 120 having a square tube in which the upper plate 121, the lower plate 126 and the pair of side plates 124 are integrally formed with each other, and the present invention is not limited thereto. The present invention may also use the module frame 120 formed so that three surfaces thereof form a U-shaped frame and a plate forming the other surface covers an open surface of the U-shaped frame.

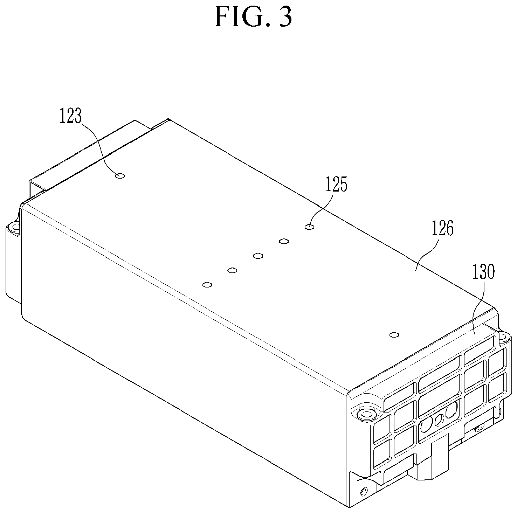

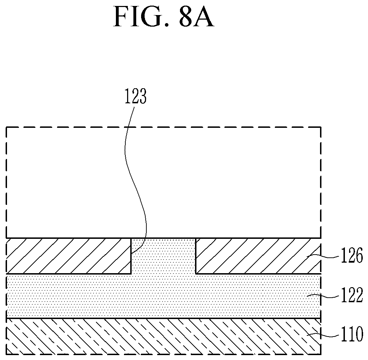

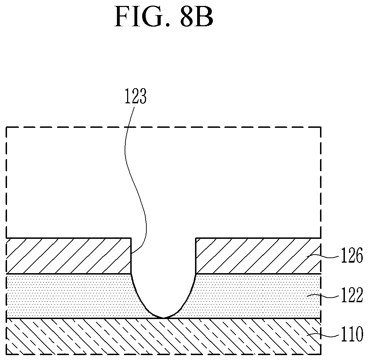

The lower plate 126 of the module frame 120 may include a plurality of injection holes 125 (shown in FIG. 3) for injecting a thermal conductive resin solution 122 (shown in FIG. 7) for forming a thermal conductive resin layer 122' (shown in FIGS. 8a and 8b) for heat dissipation, which is described below.

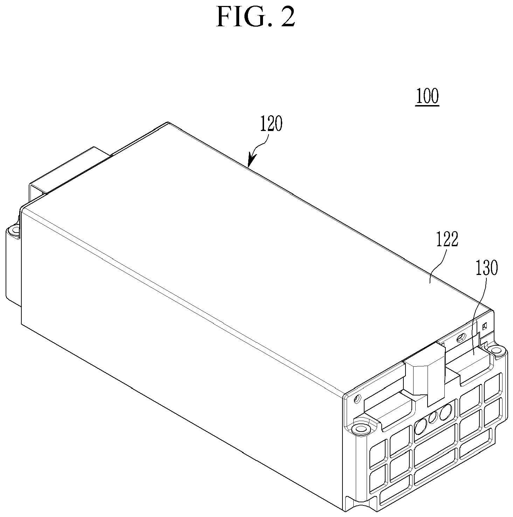

Next, referring to FIG. 2, an end plate 130 may be coupled to the opening 128 of the module frame 120. The end plate 130 may include a component electrically connecting the electrode lead 114 to the outside.

Next, referring to FIG. 3, the battery module 100 may be inverted so that the lower plate 126 of the module frame 120 faces upward.

At least one injection hole 125 and at least one observation hole 123 may be formed in the lower plate 126. At least one injection hole 125 may be formed in a central portion of the lower plate 126, and the thermal conductive resin solution 122 may be injected through the injection hole 125 formed in the central portion, flow to both side portions of the lower plate, and thus be entirely spread over and applied to a space between the lower plate 126 and the battery cell stack 110. Here, the observation hole 123 may be formed at each of two ends of the lower plate 126 in the length direction to check whether the thermal conductive resin solution 122 is sufficiently injected. FIG. 3 shows that one observation hole 123 is formed in a portion adjacent to each of two ends, and the present invention is not limited thereto. Two or more observation holes 123 may be formed in the lower plate 126 in a width direction, and appropriately selected based on a size of the battery module 100.

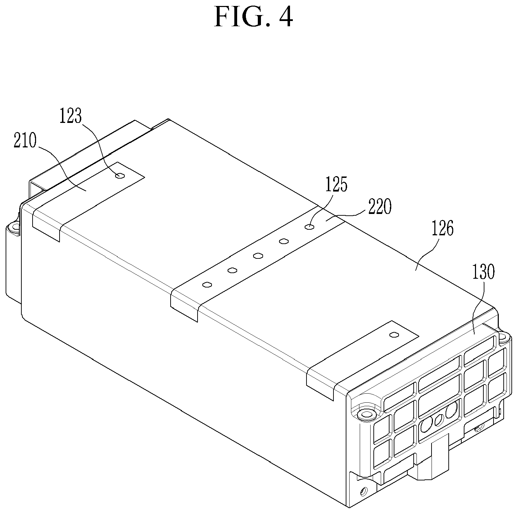

Next, referring to FIG. 4, adhesive tapes 210 and 220 may respectively be attached to the vicinities of the injection hole 125 and observation hole 123 of the lower plate 126.

The adhesive tapes 210 and 220 attached to the vicinities of the injection hole 125 and observation hole 123 may include holes respectively corresponding to the injection hole 125 and the observation hole 123. These adhesive tapes 210 and 220 may be removed after an injection process and a curing process are finished, and here, the excess thermal conductive resin solution 122 overflowing out of the hole may also be removed. That is, the adhesive tapes 210 and 220 may serve as a kind of masking tapes.

Next, referring to FIGS. 5 and 7, the thermal conductive resin solution 122 may be injected through the injection hole 125, and injection information of the thermal conductive resin solution 122 may be written on at least a portion of the adhesive tapes 210 and 220.

The thermal conductive resin solution 122 may form the thermal conductive resin layer 122' made of a thermal conductive material to dissipate heat occurring in the battery cell stack 110 to the outside, and may be made of thermal resin for example. An example of the thermal resin may be silicone, urethane, epoxy or the like.

The thermal conductive resin solution 122 may be injected through the injection hole 125, and whether an injection amount is sufficient may be determined by observing, through the observation hole 123, whether the thermal conductive resin solution 122 arrives at either end of the lower plate 126 in the length direction.

The thermal conductive resin solution 122 injected in a liquid state may be naturally cured after the injection is completed to form the thermal conductive resin layer 122'. Here, when the adhesive tapes 210 and 220 are removed while curing time is not sufficiently elapsed, an incomplete filling phenomenon may occur in which the thermal conductive resin solution 122 fails to sufficiently fill the space between the lower plate 126 and the battery cell stack 110. That is, as shown in FIG. 7, a portion of the thermal conductive resin solution 122 may flow out of the hole such as the observation hole 123 and then be cured while permeating into the hole again during the curing process, thereby completely filling the inside of the hole. Here, when the adhesive tape is removed after insufficient curing time, the incomplete filling phenomenon may occur.

Therefore, in order to prevent an error in removing the adhesive tapes 210 and 220 before the sufficient curing time is elapsed, the injection information of the injected thermal conductive resin solution 122 may be written on at least a portion of the adhesive tapes 210 and 220, for example, the adhesive tape 210 attached to the vicinity of any one observation hole 123, as shown in FIG. 5. Here, injection date and injection time may be written as the injection information for example. The injection information may be written on the adhesive tape 220 in the vicinity of the injection hole 125. However, it may be more preferable to write the information on the adhesive tape 210 in the vicinity of the observation hole 123 which may secure a wider area. It may be possible to check whether the sufficient curing time is elapsed after checking the written injection information in this step, and then perform the next step, thereby preventing the incomplete filling due to an error caused by an operator, etc.

In particular, as shown in FIG. 5, the injection and curing of the thermal conductive resin solution 122 may be performed in a state where the lower plate 126 is inverted to face upward. The information on the battery module 100 may thus be checked while being inverted in this way, thus making it easier to classify, manage, and identify the product in a semi-finished state.

The curing time may be taken one hour to two hours so that the thermal conductive resin solution 122 may be completely cured by the natural curing, is not limited thereto, and may be appropriately adjusted based on the type and amount of the injected thermal conductive resin. Accordingly, not only the injection time but also the type and amount of the injected resin may be written on the adhesive tape 210, and the present invention is not particularly limited thereto.

In addition, the adhesive tapes 210 and 220 may each be a tape having its own characteristic in which its color or transparency is changed by time elapse, or a tape having a characteristic in which its color or transparency is changed by temperature change. Accordingly, even if the operator does not write the injection information by mistake, it may be inferred how much time is elapsed or how much the curing of the inner thermal conductive resin solution 122 is progressed based on the change in the color or transparency of the adhesive tape 210 or 220, thereby doubly preventing the process error. Here, in order to more accurately check the change in color of the adhesive tape 210 or 220 over time, the operator may check a color change table over time or the like after the attachment of the adhesive tape 210 or 220. In addition, the thermal conductive resin solution 122 may be mixed while being injected into the module through a nozzle, have a slight temperature rise as a reaction occurs during its mixing, and then return to its original temperature when the curing is completed. Accordingly, the curing time may be inferred by using the adhesive tapes 210 and 220 which are sensitive to this temperature difference.

In addition to the adhesive tapes 210 and 220, an ink for marking on the adhesive tapes 210 and 220 may be an ink having a characteristic in which its color is changed by time elapse or temperature change. It is thus possible to doubly check process information by using such an ink.

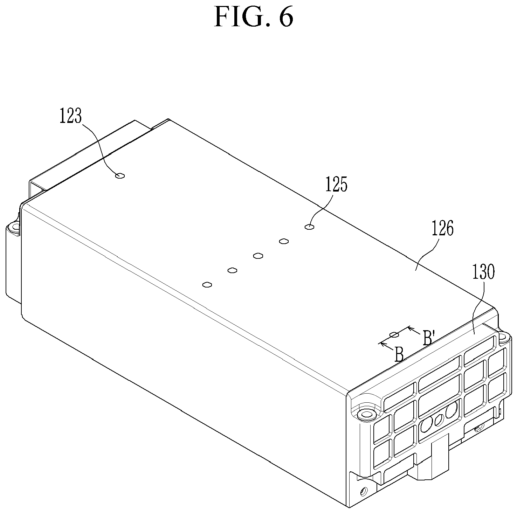

Next, referring to FIGS. 6, 8a and 8b, the battery module 100 including the thermal conductive resin layer 122' may be completed by removing the adhesive tapes 210 and 220 after completing the curing of the thermal conductive resin solution 122.

Here, some of the resin solution flowing out through the observation hole 123 and the injection hole 125 and then cured may also be removed together with the adhesive tapes 210 and 220, and it is thus possible to complete the battery module 100 having a neat appearance. In particular, in an exemplary embodiment of the present invention in which the adhesive tapes 210 and 220 are removed after the sufficient curing time is elapsed by utilizing the injection information written on the adhesive tape 210, the thermal conductive resin layer 122' is formed to sufficiently fill the space between the lower plate 126 and the battery cell stack 110 as shown in FIG. 8a, thereby preventing the incomplete filling phenomenon. On the other hand, unlike an exemplary embodiment of the present invention, when the adhesive tapes 210 and 220 are removed before the curing is completed without checking the injection information, a defect may occur in which the thermal conductive resin layer 122 fails to sufficiently fill the space between the lower plate 126 and the battery cell stack 110 and has a partial depression as shown in FIG. 8b, etc. In this case, it may be difficult to rework to fill the corresponding portion with the thermal conductive resin solution, and it may take excessive time for classify and inspecting the defect. According to an exemplary embodiment of the present invention, it is possible to prevent the occurrence of such a defect in advance, and it is thus possible to easily and accurately manage and identify the injection process of the thermal conductive resin solution.

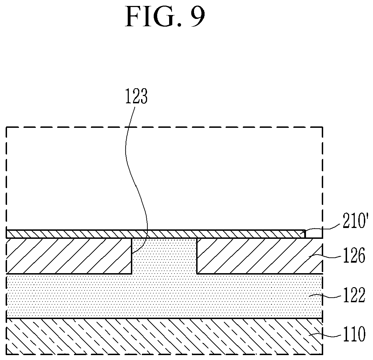

Hereinafter, the description describes a method for manufacturing a battery module according to another exemplary embodiment of the present invention with reference to FIG. 9.

Another exemplary embodiment of the present invention omits the description of the same part as that of the method for manufacturing a battery module according to an exemplary embodiment described above, and only describes a different part.

FIG. 9 is a cross-sectional view showing a portion of a cross section taken along line B-B' of FIG. 6 in another exemplary embodiment of the present invention.

Referring to FIG. 9, another exemplary embodiment of the present invention is the same as an exemplary embodiment described above, except that an adhesive tape 210' attached to the observation hole 123 is a transparent tape blocking the observation hole 123. The transparent adhesive tape 210' may be attached to the observation hole 123, and it is thus possible to observe whether the resin solution is injected. In addition, the observation hole 123 may be blocked from the outside by the adhesive tape 210'. Accordingly, the thermal conductive resin solution 122 does not leak to the outside, and may be moved into the lower plate 126 again by adhesive pressure of the adhesive tape 210'. The resin composition may thus be evenly spread even to the most distal end of the lower plate 126.

In addition, the information on the thermal conductive resin solution 122 injected into the transparent adhesive tape 210' may be written and the curing time may be controlled by checking the information, thereby making it possible to remove the adhesive tape 210' after the sufficient curing is achieved. Even in this exemplary embodiment, when the adhesive tape 210' is removed before the sufficient curing time is elapsed, an uncured portion may be attached to and removed from the adhesive tape 210' through the hole, resulting in the incomplete filling problem. However, it is possible to prevent the occurrence of the defect due to the incomplete filling by writing the information on the injected thermal conductive resin solution 122 on the transparent adhesive tape 210' and checking the information to secure the sufficient curing time.

Although the exemplary embodiments of the present invention have been described in detail hereinabove, the scope of the present invention is not limited thereto. That is, various modifications and alterations made by a person of ordinary skill in the art by using a basic concept of the present invention as defined in the following claims fall within the scope of the present invention.

### <Description of symbols>

100: battery module
110: battery cell stack
120: module frame
122: thermal conductive resin solution
123: observation hole
125: injection hole
210, 220: adhesive tape

## Claims

1. A method for manufacturing a battery module, the method comprising:
manufacturing a battery cell stack by stacking a plurality of plate-shaped battery cells to be parallel and adjacent to each other;
accommodating the battery cell stack in a module frame including four plates surrounding at least four surfaces of the battery cell stack;
attaching adhesive tapes to the vicinities of an injection hole and an observation hole formed in a lower plate among the four plates;
injecting a thermal conductive resin solution through the injection hole; and
writing injection information of the thermal conductive resin solution on at least a portion of the adhesive tape.

2. The method of claim 1, further comprising
curing the thermal conductive resin solution based on the injection information after injecting the thermal conductive resin solution, and then removing the adhesive tape.

3. The method of claim 2, wherein
curing time of the thermal conductive resin solution is one hour to two hours.

4. The method of claim 1, wherein
the injection hole includes at least two holes formed in a central portion of the lower plate in a length direction.

5. The method of claim 1, wherein
the observation hole is spaced apart from the injection hole in the length direction of the lower plate and positioned at each of two ends of the lower plate in the length direction.

6. The method of claim 1, wherein
the thermal conductive resin solution is a thermal resin.

7. The method of claim 1, wherein
the thermal conductive resin solution is cured to form a thermal conductive resin layer between the battery cell stack and the lower plate.

8. The method of claim 1, wherein
the injection of the thermal conductive resin solution is performed until the thermal conductive resin solution is observed in the observation hole.

9. The method of claim 2, wherein
the adhesive tapes have holes respectively corresponding to the observation hole and the injection hole, and
the excess thermal conductive resin solution overflowing out of the injection hole or the observation hole is also removed by removing the adhesive tape.

10. The method of claim 1, wherein
the injection information of the thermal conductive resin solution includes injection time of the thermal conductive resin solution.

11. The method of claim 1, wherein
the adhesive tape is a transparent tape, and attached to block the observation hole.

12. The method of claim 1, wherein
the adhesive tape is a tape having a characteristic changed by any one of temperature change and time elapse.

13. The method of claim 12, wherein
the characteristic is at least one of color and transparency of the adhesive tape.

14. The method of claim 1, wherein
the writing of the injection information is performed by an ink, and the ink has a characteristic changed by any one of temperature change and time elapse.

15. The method of claim 14, wherein
the characteristic is at least one of color and transparency of the ink.
